# FASCICULE DE BREVET EUROPEEN

(11) **EP 1 189 777 B1**
(45) Date de publication et mention de la délivrance du brevet: **05.04.2006**
(21) Numéro de dépôt: 01925620.5
(22) Date de dépôt: 11.04.2001
(51) Int. Cl.: B60J 7/14

(54) **VEHICULE AVEC TOIT ESCAMOTABLE NOTAMMENT DU TYPE PERMETTANT DE TRANSFORMER UN COUPE EN CABRIOLET ET VICE VERSA**
KRAFTFAHRZEUG MIT VERSENKBAREM DACH INSBESONDERE VON DER GATTUNG DIE EINE UMWANDLUNG VOM CABRIO ZUM COUPE UND UMGEKEHRT ERMÖGLICHT
VEHICLE WITH A RETRACTABLE ROOF FOR TRANSFORMING A HARD TOP INTO A CONVERTIBLE AND INVERSELY

(30) Priorité: 05.05.2000 FR 0005793
(43) Date de publication de la demande: 27.03.2002
(73) Titulaire: Société Européenne de Brevets Automobiles, 75011 Paris (FR)
(72) Inventeur: QUEVEAU, Gérard, F-79140 Le Pin (FR); QUEVEAU, Paul, F-79140 Montravers (FR); VRILLAC, Philippe, F-85290 Saint Laurent sur Sèvre (FR)
(74) Mandataire: Geismar, Thierry
(86) Numéro de dépôt international: PCT/FR2001/001117
(87) Numéro de publication internationale: WO 2001/085479

(56) Documents cités:
- EP-A- 0 351 383
- DE-A- 19 706 398

## Description

La présente invention concerne un véhicule avec un toit escamotable notamment du type permettant de transformer un coupé en cabriolet et vice versa.

On connaît des toits escamotables du type précité comprenant un élément avant formant le pavillon et un élément arrière formant la lunette arrière.

Ce type de toit escamotable comprend des moyens pour déplacer les deux éléments du toit entre une position dans laquelle ces deux éléments recouvrent l'habitacle du véhicule et une position dans laquelle ils sont rangés à l'intérieur du coffre du véhicule.

Par ailleurs, des verrous mobiles entre une position de verrouillage et une position de déverrouillage sont agencés pour verrouiller l'élément avant au bord avant du toit fixe et à l'élément arrière et pour verrouiller ce dernier à la carrosserie du véhicule.

Le document DE-A-197 06 398 divulgue un tel véhicule avec un toit escamotable selon le préambule de la revendication 1.

Dans les toits escamotables connus les moyens pour déplacer les éléments avant et arrière du toit vers le coffre du véhicule comprennent en général un système de bras articulés fixés de façon articulée à la carrosserie et pouvant basculer vers l'arrière pour entraîner les éléments du toit vers le coffre.

Les bras articulés du mécanisme ci-dessus présentent l'inconvénient d'encombrer l'intérieur de l'habitacle du véhicule.

Le but de la présente invention est de remédier aux inconvénients ci-dessus en créant un toit escamotable dans lequel le mécanisme pour déplacer les éléments du toit vers le coffre est entièrement situé à l'extérieur de l'habitacle du véhicule.

L'invention vise ainsi un véhicule avec un toit escamotable, ledit toit comprenant un élément avant formant le pavillon et un élément arrière formant la lunette arrière, des moyens pour déplacer ces deux éléments entre une position dans laquelle ces deux éléments recouvrent l'habitacle du véhicule et une position dans laquelle ils sont rangés à l'intérieur du coffre du véhicule, des verrous mobiles entre une position de verrouillage et une position de déverrouillage étant agencés pour verrouiller l'élément avant à la traverse supérieure du pare-brise et à l'élément arrière et pour verrouiller ce dernier à la carrosserie du véhicule.

Suivant l'invention, ce toit escamotable est caractérisé en ce que le coffre arrière comporte un bras télescopique portant des moyens de préhension, ce bras étant mobile entre une première position dans laquelle il est rétracté à l'intérieur du coffre, une deuxième position dans laquelle, le couvercle du coffre étant ouvert, ledit bras est déployé au-dessus du véhicule et les moyens de préhension de ce bras sont en contact avec l'élément avant et aptes à soulever cet élément avant après déverrouillage de celui-ci par rapport à la traverse du pare-brise et par rapport à l'élément arrière, une troisième position dans laquelle ledit bras place l'élément avant sur l'élément arrière, des moyens étant prévus pour verrouiller dans cette position, les deux éléments l'un à l'autre et une quatrième position dans laquelle, après déverrouillage de l'élément arrière par rapport à la carrosserie, ledit bras place les deux éléments de toit verrouillés l'un à l'autre, à l'intérieur du coffre.

Le bras ci-dessus permet ainsi de déplacer les deux éléments du toit dans le coffre arrière en les rangeant l'un sur l'autre de façon à encombrer le moins possible l'intérieur du coffre.

De plus, ce bras n'encombre pas l'intérieur de l'habitacle du véhicule et occupe une place très réduite à l'intérieur du coffre.

Selon une version préférée de l'invention, des moyens sont prévus pour commander automatiquement les mouvements suivants :
- l'ouverture du couvercle du coffre,
- le déplacement du bras de la première position vers la deuxième position,
- le déverrouillage de l'élément avant par rapport à la traverse du pare-brise, et par rapport à l'élément arrière,
- la liaison entre les moyens de préhension du bras et l'élément avant,
- le déplacement du bras de la deuxième position vers la troisième position,
- le verrouillage de l'élément avant par rapport à l'élément arrière, lorsque ces deux éléments sont en position superposée,
- le déverrouillage de l'élément arrière par rapport à la carrosserie,
- le déplacement du bras de la troisième position vers la quatrième position,
- la fermeture du couvercle du coffre.

De préférence également, le couvercle du coffre est fixé de façon articulée à la partie arrière de la carrosserie, de façon à s'ouvrir de l'avant vers l'arrière jusqu'à une position sensiblement verticale et le bras télescopique est fixé de façon pivotante près du bord avant du couvercle du coffre de façon à pouvoir se déplacer entre une position dans laquelle, le couvercle du coffre étant fermé, il s'étend sous ce couvercle et une position dans laquelle, le couvercle étant ouvert, il s'étend sensiblement horizontalement de façon que les éléments télescopiques du bras puissent se déployer vers l'avant, au-dessus du véhicule.

Les moyens de préhension portés par le bras peuvent comprendre une ventouse pouvant s'appliquer sur la surface extérieure de l'élément avant pour établir une liaison avec ce dernier sous l'effet d'une dépression.

En variante, les moyens de préhension portés par le bras peuvent comprendre un électro-aimant pouvant s'appliquer sur la surface extérieure de l'élément avant pour établir une liaison avec ce dernier, sous l'effet d'un champ électromagnétique.

D'autres particularités et avantages de l'invention apparaîtront encore dans la description qui va suivre.

Aux dessins annexés, donnés à titre d'exemples non limitatifs :
- la figure 1 est une vue schématique en élévation d'un véhicule équipé d'un toit escamotable conforme à l'invention ;
- la figure 2 est une vue analogue à la figure 1 montrant le couvercle du coffre en position ouverte ;
- la figure 3 est une vue analogue à la figure 2 montrant le bras télescopique en position d'extension et en contact avec l'élément avant du toit ;
- la figure 4 est une vue analogue à la figure 3 montrant le bras après positionnement de l'élément avant du toit sur l'élément arrière ;
- la figure 5 est une vue analogue à la figure 4 montrant les deux éléments du toit rangés à l'intérieur du coffre ;
- la figure 6 est une vue analogue à la figure 5 montrant la position du bras lorsque le couvercle du coffre est fermé ;
- la figure 7 est une vue en coupe schématique d'une ventouse de préhension portée par le bras télescopique ;
- la figure 8 est une vue en coupe schématique d'un électro-aimant de préhension porté par le bras télescopique ;
- la figure 9 est une vue en coupe schématique longitudinale partielle de l'élément avant du toit et de la traverse du pare-brise montrant le verrou en position de verrouillage ;
- la figure 10 est une vue analogue à la figure 9 montrant le verrou en position de déverrouillage ;
- la figure 11 est une vue en coupe schématique longitudinale partielle de l'élément avant et de l'élément arrière en position superposée et verrouillée l'un à l'autre.

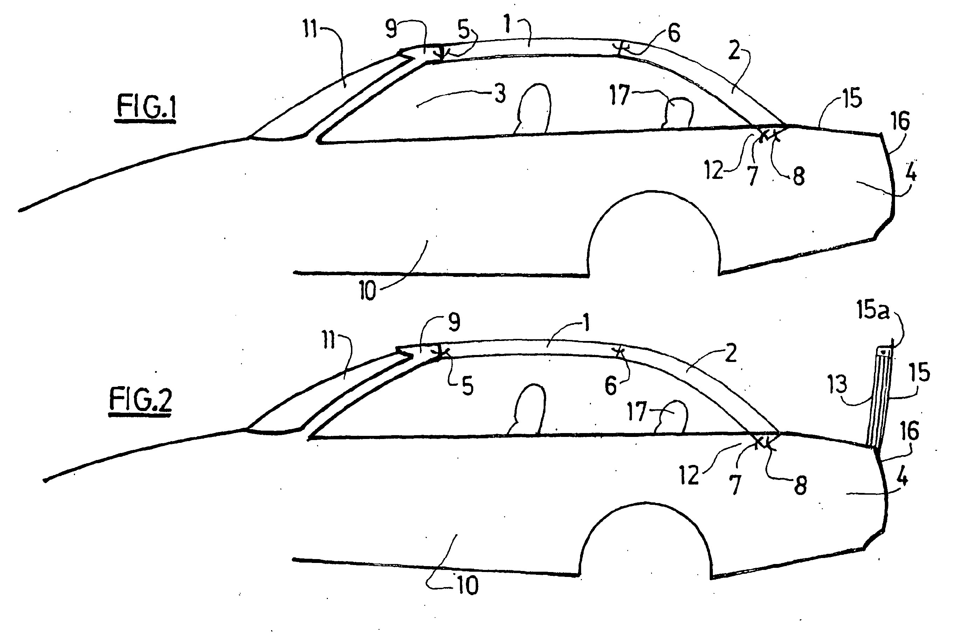

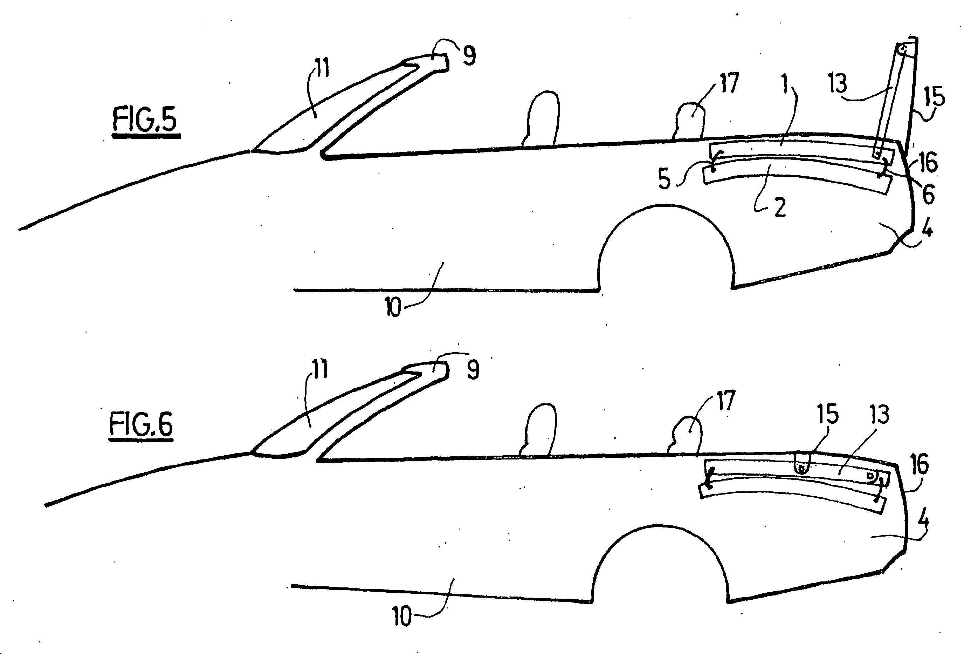

Dans la réalisation représentée sur les figures 1 à 6, le toit escamotable pour le véhicule 10, comprend un élément avant 1 formant le pavillon et un élément arrière 2 formant la lunette arrière. Il est prévu en outre des moyens pour déplacer ces deux éléments 1, 2 entre une position (voir figure 1) dans laquelle ces deux éléments 1, 2 recouvrent l'habitacle 3 du véhicule et une position (voir figure 6) dans laquelle ils sont rangés à l'intérieur du coffre 4 du véhicule. Par ailleurs, des verrous 5, 6, 7, 8 mobiles entre une position de verrouillage et une position de déverrouillage sont agencés pour verrouiller l'élément avant 1 à la traverse supérieure 9 du pare-brise 11 et à l'élément arrière 2 et pour verrouiller ce dernier à la carrosserie 12 du véhicule.

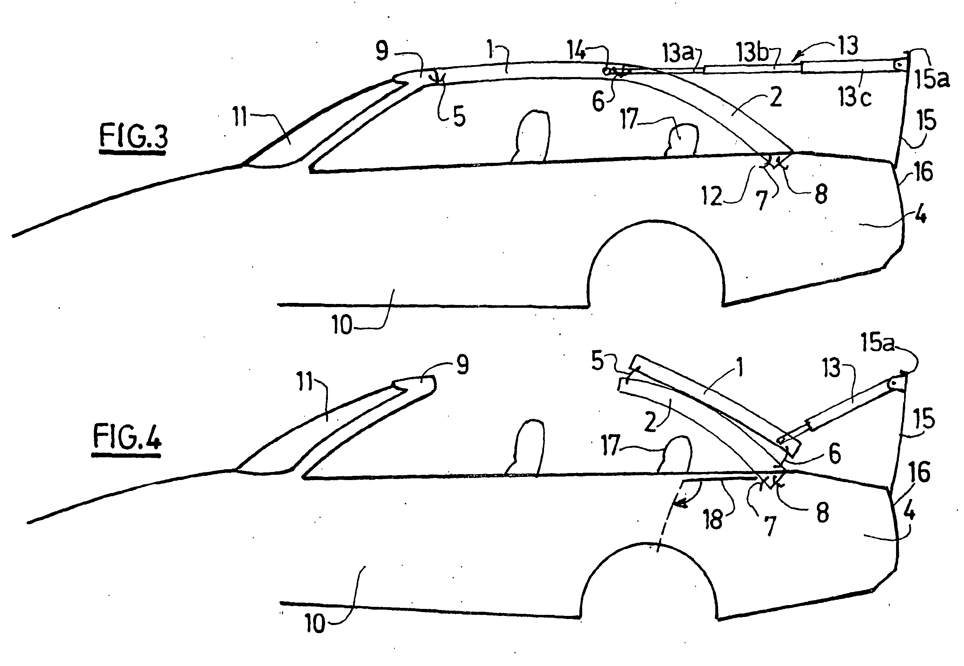

Conformément à l'invention, le coffre arrière 4 comporte un bras télescopique 13 portant des moyens de préhension 14. Ce bras 13 est mobile entre une première position dans laquelle il est rétracté à l'intérieur du coffre 4, une deuxième position (voir figure 3) dans laquelle, le couvercle 15 du coffre 4 étant ouvert, le bras 13 est déployé au-dessus du véhicule et les moyens de préhension 14 de ce bras 13 sont en contact avec l'élément avant 1 et aptes à soulever cet élément avant 1 après déverrouillage de celui-ci par rapport à la traverse 9 du pare-brise 11 et par rapport à l'élément arrière 2, une troisième position (voir figure 4) dans laquelle le bras place l'élément avant 1 sur l'élément arrière 2, des moyens étant prévus pour verrouiller dans cette position, les deux éléments 1, 2 l'un à l'autre et une quatrième position (voir figure 5) dans laquelle; après déverrouillage de l'élément arrière 2 par rapport à la carrosserie 12, le bras 13 place les deux éléments de toit 1, 2 verrouillés l'un à l'autre, à l'intérieur du coffre 4.

Le toit escamotable comprend de préférence, des moyens pour commander automatiquement les mouvements suivants :
- l'ouverture du couvercle 15 du coffre (voir figure 2),
- le déplacement du bras 13 de la première position vers la deuxième position (voir figure 3),
- le déverrouillage de l'élément avant 1 par rapport à la traverse 9 du pare-brise et par rapport à l'élément arrière 2,
- la liaison entre les moyens de préhension 14 du bras et l'élément avant 1,
- le déplacement du bras 13 de la deuxième position vers la troisième position,
- le verrouillage de l'élément avant 1 par rapport à l'élément arrière 2, lorsque ces deux éléments sont en position superposée,
- le déverrouillage de l'élément arrière 2 par rapport à la carrosserie 12,
- le déplacement du bras 13 de la troisième position vers la quatrième position,
- la fermeture du couvercle 15 du coffre.

Les moyens de commande ci-dessus peuvent être électriques et/ou hydrauliques.

Dans l'exemple représenté, le couvercle 15 du coffre est fixé de façon articulée à la partie arrière 16 de la carrosserie 12, de façon à s'ouvrir de l'avant vers l'arrière jusqu'à une position sensiblement verticale, comme indiqué sur les figures 2 à 5.
Comme également montré par les figures 2 à 5, le bras télescopique 13 est fixé de façon pivotante près du bord avant 15 a du couvercle 15 du coffre de façon à pouvoir se déplacer entre une position dans laquelle, le couvercle 15 du coffre étant fermé (voir figure 6), il s'étend sous ce couvercle 15 et une position dans laquelle, le couvercle étant ouvert (voir figure 3), il s'étend sensiblement horizontalement de façon que les éléments télescopiques 13 a, 13 b, 13 c du bras puissent se déployer vers l'avant, au-dessus du véhicule 10.

Dans l'exemple représenté sur la figure 4, la plage arrière du véhicule qui s'étend entre le dossier du siège arrière 17 et la partie arrière de l'élément arrière 2, comporte une tablette pivotante 18.

Cette tablette 18 pivote vers l'intérieur du coffre et vers le fond avant de celui-ci, avant déverrouillage des deux éléments 1, 2 par rapport à la carrosserie 12 et déplacement de ces éléments vers le coffre 4.

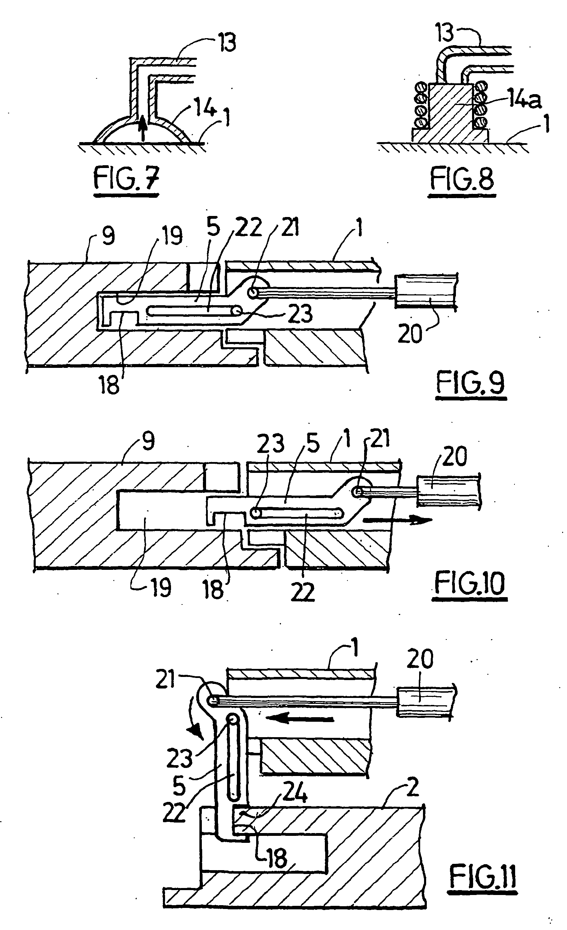

Comme montré par la figure 7, les moyens de préhension portés par le bras 13 peuvent comprendre une ventouse 14 pouvant s'appliquer sur la surface extérieure de l'élément avant 1 pour établir une liaison avec ce dernier sous l'effet d'une dépression.

Dans la variante représentée par la figure 8, les moyens de préhension portés par le bras 13 comprennent un électro-aimant 14 a pouvant s'appliquer sur la surface extérieure de l'élément avant 1 pour établir une liaison avec ce dernier, sous l'effet d'un champ électromagnétique.

Dans la réalisation représentée sur les figures 1 à 6 les verrous 5, 6 qui verrouillent ensemble l'élément avant 1 à la traverse 9 du pare-brise et à l'élément arrière 2 sont également aptes à verrouiller ensemble l'élément avant 1 à l'élément arrière 2 dans la troisième position, représentée sur la figure 4.

Les figures 9 à 11 illustrent, à titre d'exemple non limitatifs, l'un des verrous 5, 6 capable de réaliser les deux verrouillages précités.

Dans cet exemple, le verrou 5 comprend un pêne à crochet 18, coulissant et pivotant, mobile entre une position de verrouillage (voir figure 9) dans laquelle il est engagé dans un évidement 19 de la traverse 9 du pare-brise, une position de déverrouillage (voir figure 10), dans laquelle le pêne 5 après coulissement, est dégagé de l'évidement 19 et une position (voir figure 11) dans laquelle, l'élément avant 1 étant placé au-dessus de l'élément arrière 2, le crochet 18 du pêne, après coulissement et pivotement vers le bas, vient en prise avec une saillie 24 prévue sur le bord avant de l'élément arrière 2.

Le verrou 6 prévu sur la partie arrière de l'élément avant 1 coopère de la même façon avec d'une part le bord avant de l'élément arrière 2, lorsque les éléments 1 et 2 sont dans la position représentée sur les figures 1 à 3, et lorsque ces éléments 1, 2 sont dans la position représentée sur la figure 4.

Dans l'exemple des figures 9 à 11, le pêne 5 peut coulisser d'une part grâce à un vérin 20 dont la tige est reliée à un axe de pivotement 21 du pêne 5 et grâce à une lumière longitudinale 22 réalisée dans le pêne 5 dans laquelle est engagé l'axe fixe de pivotement 23.

Le pivotement du pêne 5 montré par la figure 11 est réalisé grâce à la poussée de la tige du vérin 20 vers l'avant qui provoque la rotation du pêne 5 vers le bas et l'enclenchement de son crochet 18 sur la saillie 24 de l'élément 2.

Bien entendu l'invention n'est pas limitée aux exemples de réalisation que l'on vient de décrire et on peut apporter à ceux-ci de nombreuses modifications sans sortir du cadre de l'invention.

Ainsi, le bras télescopique 13 au lieu d'être fixé au couvercle 15 du coffre, pourrait être fixé à l'intérieur de ce coffre en un endroit quelconque de celui-ci.

## Revendications

1. Véhicule (10) avec un toit escamotable, ledit toit comprenant un élément avant (1) formant le pavillon et un élément arrière (2) formant la lunette arrière, des moyens pour déplacer ces deux éléments (1, 2) entre une position dans laquelle ces deux éléments recouvrent l'habitacle (3) du véhicule (10) et une position dans laquelle ils sont rangés à l'intérieur du coffre (4) du véhicule (10), des verrous (5, 6, 7, 8) mobiles entre une position de verrouillage et une position de déverrouillage étant agencés pour verrouiller l'élément avant (1) à la traverse supérieure (9) du pare-brise (11) et à l'élément arrière (2) et pour verrouiller ce dernier à la carrosserie (12) du véhicule (10), **caractérisé en ce que** le coffre arrière (4) comporte un bras télescopique (13) portant des moyens de préhension, ce bras (13) étant mobile entre une première position dans laquelle il est rétracté à l'intérieur du coffre (4), une deuxième position dans laquelle, le couvercle (15) du coffre étant ouvert, ledit bras (13) est déployé au-dessus du véhicule (10) et les moyens de préhension de ce bras sont en contact avec l'élément avant (1) et aptes à soulever cet élément avant (1) après déverrouillage de celui-ci par rapport à la traverse (9) du pare-brise (11) et par rapport à l'élément arrière (2), une troisième position dans laquelle ledit bras (13) place l'élément avant (1) sur l'élément arrière (2), des moyens étant prévus pour verrouiller dans cette position, les deux éléments (1, 2) l'un à l'autre et une quatrième position dans laquelle, après déverrouillage de l'élément arrière (2) par rapport à la carrosserie (12), ledit bras (13) place les deux éléments de toit (1, 2) verrouillés l'un à l'autre, à l'intérieur du coffre (4).

2. Véhicule (10) avec un toit escamotable conforme à la revendication 1, **caractérisé en ce que** des moyens sont prévus pour commander automatiquement les mouvements suivants :
- l'ouverture du couvercle (15) du coffre (4),
- le déplacement du bras (13) de la première position vers la deuxième position,
- le déverrouillage de l'élément avant (1) par rapport à la traverse (9) du pare-brise (11), et par rapport à l'élément arrière 2.
- la liaison entre les moyens de préhension du bras (13) et l'élément avant (1),
- le déplacement du bras (13) de la deuxième position vers la troisième position,
- le verrouillage de l'élément avant (1) par rapport à l'élément arrière (2) lorsque ces deux éléments sont en position superposée,
- le déverrouillage de l'élément arrière (2) par rapport à la carrosserie (12),
- le déplacement du bras (13) de la troisième position vers la quatrième position.
- La fermeture du couvercle (15) du coffre (4).

3. Véhicule (10) avec un toit escamotable conforme à l'une des revendications 1 ou 2, **caractérisé** eh ce que le couvercle (15) du coffre est fixé de façon articulée à la partie arrière (16) de la carrosserie (12), de façon à s'ouvrir de l'avant vers l'arrière jusqu'à une position sensiblement verticale.

4. Véhicule (10) avec un toit escamotable conforme à la revendication 3, **caractérisé en ce que** le bras télescopique (13) est fixé, de façon pivotante près du bord avant du couvercle (15) du coffre (4) de façon à pouvoir se déplacer entre une position dans laquelle le couvercle (15) du coffre (4) étant fermé, il s'étend sous ce couvercle (15) et une position dans laquelle, le couvercle (15) étant ouvert, il s'étend sensiblement horizontalement de façon que les éléments télescopiques (13a, 13b, 13c) du bras (13) puissent se déployer vers l'avant, au-dessus du véhicule (10).

5. Véhicule (10) avec un toit escamotable conforme à l'une des revendications 1 à 4, **caractérisé en ce que** les moyens de préhension portés par le bras (13) comprennent une ventouse (14) pouvant s'appliquer sur la surface extérieure de l'élément avant (1) pour établir une liaison avec ce dernier sous l'effet d'une dépression.

6. Véhicule (10) avec un toit escamotable conforme à l'une des revendications 1 à 4, **caractérisé en ce que** les moyens de préhension portés par le bras (13) comprennent un électro-aimant (14 a) pouvant s'appliquer sur la surface extérieure de l'élément avant (1) pour établir une liaison avec ce dernier, sous l'effet d'un champ électromagnétique.

7. Véhicule (10) avec un toit escamotable conforme à l'une des revendications 1 à 6, **caractérisé en ce que** les verrous (5, 6) qui verrouillent ensemble l'élément avant (1) à la traverse (9) du pare-brise et à l'élément arrière (2) sont également aptes à verrouiller ensemble l'élément avant (1) à l'élément arrière (2) dans ladite troisième position.

8. Véhicule (10) avec un toit escamotable conforme à la revendication 7, **caractérisé en ce que** lesdits verrous (5, 6) comprennent un pêne à crochet (18), coulissant et pivotant mobile entre une position de verrouillage dans laquelle il est engagé dans un évidement (19) de la traverse (9) du pare-brise ou de l'élément arrière (2), une position de déverrouillage dans laquelle le pêne, après coulissement, est dégagé dudit évidement (19) et une position dans laquelle, l'élément avant (1) étant placé au-dessus de l'élément arrière (2), le crochet (18) du pêne, après coulissement et pivotement vers le bas, vient en prise avec une saillie (24) prévue sur le bord avant et le bord arrière de l'élément arrière (2).

## Patentansprüche

1. Fahrzeug (10) mit einem einklappbaren Dach, wobei das Dach ein das Verdeck bildendes vorderes Teil (1) und ein die Heckscheibe bildendes hinteres Teil (2) umfasst, sowie Mittel, um diese beiden Teile (1, 2) zu verschieben zwischen einer Position, in der diese beiden Teile den Innenraum (3) des Fahrzeugs (10) abdecken, und einer Position, in der sie innerhalb des Kofferraums (4) des Fahrzeugs (10) verstaut sind, wobei zwischen einer Verriegelungsposition und einer Entriegelungsposition mobile Riegel (5, 6, 7, 8) vorgesehen sind, um das vordere Teil (1) am oberen Querträger (9) der Windschutzscheibe (11) und am hinteren Teil (2) zu verriegeln, und um letzteres an der Karosserie (12) des Fahrzeugs (10) zu verriegeln, **dadurch gekennzeichnet, dass** der Kofferraum (4) einen Ergreifungsmittel tragenden teleskopischen Arm (13) umfasst, wobei dieser Arm (13) mobil ist zwischen einer ersten Position, in der er in den Kofferraum (4) eingefahren ist, einer zweiten Position, in der der Arm (13) bei geöffneter Kofferraumklappe (15) über das Fahrzeug (10) ausgefahren ist und die Ergreifungsmittel dieses Arms in Kontakt stehen mit dem vorderen Teil (1) und dieses vordere Teil (1) nach seiner Entriegelung von dem Querträger (9) der Windschutzscheibe (11) von dem hinteren Teil (2) anheben können, einer dritten Position, in der der Arm (13) das vordere Teil (1) auf das hintere Teil (2) setzt, wobei Mittel vorgesehen sind, um die beiden Teile (1, 2) in dieser Position miteinander zu verriegeln, und einer vierten Position, in der der Arm (13) nach Entriegelung des hinteren Teils (2) von der Karosserie (12) die beiden miteinander verriegelten Dachteile (1, 2) in dem Kofferraum (4) verstaut.

2. Fahrzeug mit einem einklappbaren Dach gemäß Anspruch 1, **dadurch gekennzeichnet, dass** Mittel vorgesehen sind, um die folgenden Bewegungen automatisch zu steuern:
- Öffnung der Klappe (15) des Kofferraums (4),
- Verschiebung des Arms (13) von der ersten in die zweite Position,
- Entriegelung des vorderen Teils (1) von dem Querträger (9) der Windschutzscheibe (11) und von dem hinteren Teil (2),
- Verbindung zwischen den Ergreifungsmitteln des Arms (13) und dem vorderen Teil (1),
- Verschiebung des Arms (13) von der zweiten Position in die dritte Position,
- Verriegelung des vorderen Teils mit dem hinteren Teil (2), wenn diese beiden Teile übereinander liegen,
- Entriegelung des hinteren Teils (2) von der Karosserie (12),
- Verschiebung des Arms (13) von der dritten Position in die vierte Position,
- Schließen der Klappe (15) des Kofferraums (4).

3. Fahrzeug (10) mit einem einklappbaren Dach gemäß einem der Ansprüche 1 oder 2, **dadurch gekennzeichnet, dass** die Klappe (15) des Kofferraums gelenkig an dem Heckteil (16) der Karosserie (12) befestigt ist, um sich von vorne nach hinten bis in eine etwa vertikale Position zu öffnen.

4. Fahrzeug (10) mit einem einklappbaren Dach gemäß Anspruch 3, **dadurch gekennzeichnet, dass** der teleskopische Arm (13) schwenkbar in der Nähe des vorderen Randes der Klappe (15) des Kofferraums (4) befestigt ist, um sich verschieben zu können zwischen einer Position, in der er sich bei geschlossener Klappe (15) des Kofferraums (4) unter dieser Klappe (15) erstreckt, und einer Position, in der er sich bei geöffneter Klappe (15) etwa horizontal erstreckt, so dass die teleskopischen Bestandteile (13a, 13b, 13c) des Arms (13) nach vorne über das Fahrzeug (10) ausfahren können.

5. Fahrzeug (10) mit einem einklappbaren Dach gemäß einem der Ansprüche 1 bis 4, **dadurch gekennzeichnet, dass** die von dem Arm (13) getragenen Ergreifungsmittel einen Saugnapf (14) umfassen, der sich auf die Außenfläche des vorderen Teils (1) setzen kann, um unter der Einwirkung eines Unterdrucks eine Verbindung mit diesem herzustellen.

6. Fahrzeug (10) mit einem einklappbaren Dach gemäß einem der Ansprüche 1 bis 4, **dadurch gekennzeichnet, dass** die von dem Arm (13) getragenen Ergreifungsmittel einen Elektromagneten (14 a) umfassen, der sich auf die Außenfläche des vorderen Teils (1) setzen kann, um unter der Einwirkung eines elektromagnetischen Feldes eine Verbindung mit diesem herzustellen.

7. Fahrzeug (10) mit einem einklappbaren Dach gemäß einem der Ansprüche 1 bis 6, **dadurch gekennzeichnet, dass** die Riegel (5, 6), die das vordere Teil (1) mit dem Querträger (9) der Windschutzscheibe und mit dem hinteren Teil (2) verriegeln, ebenfalls das vordere Teil (1) mit dem hinteren Teil (2) in der dritten Position verriegeln können.

8. Fahrzeug (10) mit einem einklappbaren Dach gemäß Anspruch 7, **dadurch gekennzeichnet, dass** die Riegel (5, 6) eine Hakenfalle (18) umfassen, die verschiebbar und schwenkbar ist zwischen einer Verriegelungsposition, in der sie in eine Vertiefung (19) des Querträgers (9) der Windschutzscheibe oder des hinteren Teils (2) eingreift, einer Entriegelungsposition, in der die Falle nach Verschiebung aus der Vertiefung (19) gelöst ist, und einer Position, in der der Haken (18) der Falle nach Verschieben und Schwenken nach unten, wobei sich das vordere Teil (1) über dem hinteren Teil (2) befindet, mit einem Vorsprung (24) zusammenwirkt, der an dem vorderen Rand und dem hinteren Rand des hinteren Teils (2) vorgesehen ist.

## Claims

1. A vehicle (10) having a retractable roof, said roof comprising a front element (1) forming the roof proper and a rear element (2) forming the back window, means for moving the two elements (1, 2) between a position in which said two elements cover the passenger compartment (3) of the vehicle (10) and a position in which they are stowed away inside the trunk (4) of the vehicle (10), latches (5, 6, 7, 8) mounted to move between a locking position and an unlocking position being arranged to lock the front element (1) to the top crosspiece (9) of the windscreen (11) and to the rear element (2), and to lock said rear element to the bodywork (12) of the vehicle (10), said vehicle being **characterized in that** the rear trunk (4) has a telescopic arm (13) carrying pick-up means, the arm (13) being mounted to move between a first position in which it is retracted inside the trunk (4), a second position in which, with the lid (15) of the trunk being open, said arm (13) is deployed above the vehicle (10) and the pick-up means of said arm are in contact with the front element (1) and are suitable for picking up said front element (1) after it has been unlocked relative to the crosspiece (9) of the windscreen (11) and relative to the rear element (2), a third position in which said arm (13) places the front element (1) on the rear element (2), means being provided for locking the two elements (1, 2) to each other in this position, and a fourth position in which, once the rear element (2) has been unlocked relative to the bodywork (12), said arm (13) places the two locked-together roof elements (1, 2) inside the trunk (4).

2. A vehicle (10) having a retractable roof according to claim 1, **characterized in that** control means are provided for automatically causing the following movements to take place:
- opening the lid (15) of the trunk (4);
- moving the arm (13) from the first position towards the second position;
- unlocking the front element (1) relative to the crosspiece (9) of the windscreen (11) and relative to the rear element (2);
- coupling the pick-up means of the arm (13) to the front element (1);
- moving the arm (13) from the second position towards the third position;
- locking the front element (1) relative to the rear element (2) when said two elements are in the superposed position;
- unlocking the rear element (2) relative to the bodywork (12);
- moving the arm (13) from the third position towards the fourth position; and
- closing the lid (15) of the trunk (4).

3. A vehicle (10) having a retractable roof according to claim 1 or claim 2, **characterized in that** the lid (15) of the trunk is fastened in hinged manner to the rear portion (16) of the bodywork (12), so as to open from the front backwards into a substantially vertical position.

4. A vehicle (10) having a retractable roof according to claim 3, **characterized in that** the telescopic arm (13) is fastened in pivotally mounted manner close to the front edge of the lid (15) of the trunk (4) so that it can be moved between a position in which, with the lid (15) of the trunk (4) being closed, it extends under said lid (15), and a position in which, with the lid (15) being open, it extends substantially horizontally so that the telescopic elements (13a, 13b, 13c) of the arm (13) can be deployed forwards, above the vehicle (10).

5. A vehicle (10) having a retractable roof according to any one of claims 1 to 4, **characterized in that** the pick-up means carried by the arm (13) comprise a suction cup (14) suitable for being applied against the outside surface of the front element (1) so as to establish coupling therewith under the effect of suction.

6. A vehicle (10) having a retractable roof according to any one of claims 1 to 4, **characterized in that** the pick-up means carried by the arm (13) comprise an electromagnet (14a) suitable for being applied against the outside surface of the front element (1) so as to establish coupling therewith under the effect of an electromagnetic field.

7. A vehicle (10) having a retractable roof according to any one of claims 1 to 6, **characterized in that** the latches (5, 6) that lock the front element (1) to the crosspiece (9) of the windscreen and to the rear element (2) are also suitable for locking the front element (1) to the rear element (2) in said third position.

8. A vehicle (10) having a retractable roof according to claim 7, **characterized in that** each of said latches (5, 6) comprises a hooked bolt (18) that is slidably and pivotally mounted to move between a locking position in which it is engaged in a notch (19) respectively in the crosspiece (9) of the windscreen or in the rear element (2), an unlocking position in which the bolt, after sliding, is disengaged from said notch (19), and a position in which, with the front element (1) being placed above the rear element (2), the hook (18) of the bolt, after sliding and pivoting downwards, comes into engagement with a projection (24) provided respectively on the front edge of the rear element (2) or on the rear edge thereof.
